# FASCICULE DE BREVET EUROPEEN

(11) **EP 1 540 375 B1**
(45) Date de publication et mention de la délivrance du brevet: **10.01.2007**
(21) Numéro de dépôt: 03761590.3
(22) Date de dépôt: 25.06.2003
(51) Int. Cl.: H04L 29/00

(54) **PROCEDE DE GENERATION D'ADRESSE DANS UN DISPOSITIF RELIE A UN RESEAU ET UN DISPOSITIF DISPOSANT DE CE PROCEDE**
ADRESSENERZEUGUNGSVERFHAREN IN EINER MIT EINEM NETZWERK VERBUNDENEN EINRICHTUNG UND DAS VERFAHREN VERWENDENDE EINRICHTUNG
ADDRESS GENERATION METHOD IN A DEVICE CONNECTED TO A NETWORK AND DEVICE EMPLOYING SAID METHOD

(30) Priorité: 28.06.2002 FR 0208087
(43) Date de publication de la demande: 15.06.2005
(73) Titulaire: Thomson Licensing, 92100 Boulogne-Billancourt (FR)
(72) Inventeur: FLEURY, Jean-François, F-35000 Rennes (FR); CHAMPEL, Mary-Luc, F-35220 Marpiré (FR); STRAUB, Gilles, F-35690 Acigné (FR)
(74) Mandataire: Le Dantec, Claude
(86) Numéro de dépôt international: PCT/EP2003/050259
(87) Numéro de publication internationale: WO 2004/003587

(56) Documents cités:
- EP-A- 1 202 493
- US-A- 5 854 901
- ZUBAIR ALEXANDER: "Automatic Private IP Addressing" WINDOWS & .NET MAGAZINE, 25 octobre 1999 (1999-10-25), XP002217668 Extrait de l'Internet: <URL:http://www.winnetmag.com/Articles/Ind ex.cfm?ArticleID=7464> [extrait le 2002-10-18]
- DROMS R: "RFC 2131 - Dynamic Host Configuration Protocol (DHCP)" IETF RFC 2131, mars 1997 (1997-03), XP002193184 Extrait de l'Internet: <URL:http://www.ietf.org/rfc/rfc2131.txt> [extrait le 2002-03-14]

## Description

La présente invention concerne un procédé de génération d'adresse dans un dispositif relié à un réseau et un dispositif disposant de ce procédé

Il existe à ce jour de nombreux types de réseaux. Certains sont très vastes car ils permettent à des millions de terminaux de communiquer entre eux, c'est le cas par exemple du réseau INTERNET. D'autres sont beaucoup plus petits et ne comportent que quelques dizaines d'appareils, quelques centaines tout au plus. Ces derniers réseaux équipent des habitations, ce sont les réseaux domestiques, d'autres équipent des véhicules. Pour pouvoir communiquer, les terminaux possèdent une adresse qui leur est propre et qui est connue des autres terminaux du réseau. Certains réseaux sont équipés de dispositifs intelligents qui contrôlent totalement les transmissions de données sur le réseau (routeurs, ...). Lorsqu'un message arrive au sein de ce réseau, ce dispositif, connaissant l'adresse du terminal destinataire, lui envoie directement le message. D'autres réseaux ne possèdent pas de tels dispositifs et chaque terminal reçoit tous les messages échangés et ne prend en compte que les messages dont l'adresse destinataire correspond à la sienne. Ces exemples montrent l'importance de l'adresse car elle permet à chaque terminal d'être identifié, d'émettre des messages et d'en recevoir.

La communication dans un réseau s'effectue à travers des couches spécifiées dans le modèle OSI (Open System Interconnection), les couches 1 et 2 concernent les niveaux PHYSIQUE et LIAISON, et les couches 3 à 7 les niveaux logiques. On peut citer deux exemples de standard de couches 2 : ETHERNET II et IEEE802.3. La couche 3 concerne le niveau RESEAU qui spécifie le type de protocole utilisé. Un protocole très répandu et bien adapté aux réseaux domestiques est le protocole IP (« Internet Protocol »).

Sur un réseau de type ETHERNET (basé sur un protocole de couche 2 ETHERNET II ou IEEE802.3), chaque terminal possède une adresse physique, dite MAC qui est définie par le fabriquant, et inscrite définitivement dans la carte électronique. Cette adresse se situe au niveau LIAISON. En théorie, il n'est pas possible que deux appareils possèdent la même adresse MAC identique. En effet, chaque fabricant dispose d'une fenêtre d'adresses pour élaborer les adresses MAC selon ses besoins. La solution si un tel conflit existe est de changer la carte électronique dans l'appareil, il n'existe pas de remède par programme. Lorsqu'un nouvel appareil est connecté à un réseau, il est important de lui attribuer une adresse propre au réseau, c'est l'adresse IP, elle correspond au niveau RESEAU (couche 3). Cette adresse dispose d'un champ qui identifie le réseau et pour que cette adresse n'appartienne pas déjà à un autre terminal, elle possède un second champ qui identifie le terminal dans le réseau. Si le réseau possède un serveur de configuration (par exemple un serveur appelé DHCP (de l'anglais « Dynamic Host Configuration Protocol ») ), celui-ci peut attribuer automatiquement des adresses pour tout nouvel appareil branché sur le réseau. Le serveur de configuration veille à attribuer une valeur d'adresse propre à chaque terminal. Pour des réseaux dont la taille est plus petite, comme typiquement les réseaux domestiques, c'est le propriétaire du réseau qui gère ses propres adresses, et affecte manuellement une nouvelle adresse à l'appareil qu'il veut installer.

Les adresses sont codées différemment selon la taille du réseau. Il existe trois classes principales de réseau, identifiées A, B, et C. Les terminaux appartenant à des réseaux de classe A possèdent au sein de ce réseau d'une adresse codée sur 3 octets, l'identifiant du réseau étant codé sur un octet. Les réseaux B et C sont de taille de plus en plus petite, inversement, leurs nombres sont de plus en plus importants. Il est facile d'imaginer que dans un futur proche chaque habitation aura son propre réseau, de ce fait les identificateurs de tels réseaux de classe C sont codés sur 3 octets et l'adresse du terminal codée sur un octet.

Un réseau peut être découpé en plusieurs sous-réseaux, cela permet de rassembler un petit nombre de terminaux et de gérer leurs communications à partir d'un serveur central. Si un terminal veut communiquer avec un autre qui n'est pas sur le même sous-réseau, il envoie le message à un serveur intermédiaire (appelé Gateway ou passerelle) qui va retransmettre le message au destinataire. Dans le cas d'un réseau IP, l'adresse du terminal comprend un champ contenant l'identifiant du sous-réseau concaténé avec la valeur d'adresse du terminal qui occupe les bits les moins significatifs (ou LSB). Avant chaque communication, le terminal émetteur d'un message doit vérifier si le destinataire appartient au sous-réseau.

Les fabricants d'appareils connectables affectent souvent en usine une adresse IP aux appareils. Lorsque celui-ci est acheté et installé dans un réseau local, la valeur d'adresse IP donnée par le fabriquant ne convient souvent pas car le réseau local n'utilise pas forcément le même plan d'adressage, ou l'adresse est déjà utilisée. Suivant les méthodes de configuration de l'appareil, on peut être amené à connecter cet appareil à un second réseau utilisant le même plan d'adressage et où l'adresse est disponible, reconfigurer son adresse et remettre l'appareil sur le premier réseau. Une autre façon de faire consiste à reconfigurer manuellement l'adresse de l'appareil, mais cela nécessite de bien connaître l'appareil et la méthode pour le reprogrammer. Cette manière de faire est fastidieuse pour l'utilisateur.

Le document EP 1 202 493 décrit un procédé de configuration de l'adresse d'un terminal non-configuré par un terminal configuré. Suite à une requête du terminal non configuré, le terminal configuré envoie sa propre adresse et le masque du réseau. Recevant ces données, le terminal non configuré en déduit une autre valeur d'adresse possédant le même masque de réseau, essaye si cette adresse est disponible et si oui, se configure avec celle-ci. Le terminal non-configuré doit donc envoyer une requête pour qu'on lui renvoie un message comportant une adresse et un masque de réseau. Cette solution oblige l'utilisateur a lancer une requête sur le réseau ce qui nécessite déjà de la configurer un minimum, en tout état de cause, cette solution nécessite une intervention préalable de l'utilisateur.

Le document US 5,854,901 décrit un procédé de configuration de l'adresse d'un terminal non-configuré par un terminal configuré. Le terminal non configuré scrute le réseau et capte des communications contenant une valeur d'adresse. Il essaye ensuite en rajoutant une unité à la valeur d'adresse captée et en envoyant une requête de communication au terminal possédant cette adresse. S'il n'y a pas de réponse, l'adresse est disponible et il se l'affecte. S'il n'y a pas de réponse, cela peut signifier que l'adresse captée est la dernière adresse du réseau et donc la valeur suivante correspond à une adresse qui n'est plus dans le réseau. De ce fait, le terminal peut considérer que son adresse est correcte alors qu'elle ne correspond pas au réseau. Donc, la procédure décrite dans ce document ne fonctionne pas dans tous les cas.

L'objet de la présente invention pallie les problèmes évoqués ci-dessus et concerne un processus simple pour attribuer automatiquement une adresse à un nouvel appareil dans un réseau.

L'objet de la présente invention concerne un procédé selon les revendications 1 à 6 et un appareil électronique selon les revendications 7 à 10.

L'objet de la présente invention consiste en un procédé de génération d'une valeur d'adresse pour un terminal de communication relié à un réseau, le procédé étant caractérisé en ce qu'il comporte les étapes suivantes, au niveau du terminal :
a) réception d'un couple de première et seconde valeurs d'adresse à partir d'au moins une communication captée sur le réseau,
b) détermination d'une valeur caractéristique du réseau, ladite valeur étant contenue dans la première et la seconde valeur d'adresse
c) calcul d'une troisième valeur d'adresse contenant la valeur caractéristique du réseau,
d) affectation de la troisième valeur d'adresse au terminal si cette valeur n'est pas déjà affectée à un autre terminal.

De cette façon, le terminal à connecter déduit de deux valeurs d'adresse reçues du réseau, une valeur caractéristique du réseau et calcule une adresse candidate qui contient cette valeur caractéristique. Il est sûr ainsi que l'adresse candidate peut appartenir à ce réseau. Puis, le terminal teste si cette valeur candidate est bien disponible, c'est à dire si elle n'est pas déjà affectée à un terminal déjà configuré. Si cette valeur d'adresse n'est pas déjà affectée à un terminal du réseau, elle est automatiquement affectée au terminal à configurer. La génération d'adresse est automatique et n'utilise pas ni un procédure manuelle de génération, ni les services d'un serveur de configuration. En captant un message comportant deux valeurs d'adresse, le terminal à configurer peut déduire une partie du masque de réseau et élaborer ainsi une troisième valeur d'adresse qui a toutes les chances d'être compatible avec le réseau.

Selon un perfectionnement, lorsque le réseau ne contient pour le moment qu'un seul terminal configuré avec une première valeur d'adresse, ce terminal émet un message contenant son adresse et une seconde valeur d'adresse calculée en changeant la valeur d'un bit. Le terminal à configurer capte le message et constatant qu'aucune réponse n'est émise en retour, ce qui témoigne qu'aucun terminal ne possède la seconde adresse, s'affecte cette seconde valeur d'adresse comme sa valeur d'adresse. Le bit dont la valeur est changée est par exemple le moins significatif.

Selon un autre perfectionnement, le terminal à configurer reçoit deux valeurs d'adresse de deux terminaux déjà configurés dans le réseau, et en déduit une valeur caractéristique du réseau. Le terminal à configurer calcule alors une troisième valeur d'adresse en concaténant cette valeur caractéristique et une valeur propre en commençant par la valeur maximale. Si cette troisième valeur d'adresse n'est pas disponible, le terminal à configurer diminue d'une unité la valeur propre tout en gardant identique la valeur caractéristique du réseau, et ainsi de suite, par valeur décroissante jusqu'à ce que le terminal trouve une valeur d'adresse disponible.

Selon un autre perfectionnement, si le terminal ne trouve pas de valeur d'adresse disponible, il calcule une troisième valeur d'adresse en changeant la valeur du bit de poids le plus faible de la valeur caractéristique du réseau précédemment calculée, la valeur caractéristique du réseau étant de ce fait diminuée d'un bit. Puis le terminal teste si au moins une des nouvelles troisième valeurs calculées est disponible. Ce processus est itératif : chaque fois la dernière valeur caractéristique du réseau est diminuée du bit de poids le plus faible.

Selon un autre perfectionnement, le procédé comporte une étape d'émission d'une requête de communication ARP en spécifiant la troisième adresse et une étape d'attente de réception d'une réponse à ladite requête. Si une réponse est reçue, alors l'adresse contenue dans la requête est déjà prise, un calcul d'une nouvelle adresse est alors effectuée et sa disponibilité est testée. Ainsi, l'utilisateur n'a pas à intervenir, le terminal à configurer teste automatiquement si la nouvelle adresse qu'il a calculée est bien disponible.

L'objet de la présente invention consiste également en un appareil électronique destiné à être connecté à un réseau de communication comprenant un moyen de communication bi-directionnel avec ledit réseau, caractérisé en ce qu'il comporte un moyen de réception d'un message comportant une première et une seconde valeur d'adresse, un moyen pour déterminer une valeur caractéristique du réseau qui constitue une partie de la première et de la seconde valeur d'adresse, et pour calculer une troisième valeur d'adresse contenant la valeur caractéristique du réseau, et pour affecter cette troisième valeur d'adresse à l'appareil si à la suite d'une requête de communication émise par le moyen de communication à destination d'un appareil possédant la troisième adresse, il s'avère que cette troisième valeur d'adresse n'est affectée à aucun terminal du réseau.

L'objet de la présente invention consiste également en un appareil électronique destiné à être connecté à un réseau de communication comprenant un moyen de communication bi-directionnel avec ledit réseau, caractérisé en ce qu'il comporte un moyen de réception d'un message comportant une première et une seconde valeur d'adresse, et un moyen pour affecter la seconde valeur d'adresse à l'appareil s'il s'avère que cette seconde valeur d'adresse n'est affectée à aucun terminal du réseau.

L'invention, avec ses caractéristiques et avantages, ressortira plus clairement à la lecture de la description d'un exemple de réalisation particulier non limitatif fait en référence aux dessins annexés dans lesquels :
- la figure 1 est un schéma d'un réseau comprenant plusieurs appareils selon l'exemple de réalisation ;
- la figure 2 est un schéma montrant les différents éléments d'un terminal utilisant le procédé de génération d'adresse selon le présent exemple de réalisation ;
- la figure 3 représente un organigramme détaillé du procédé de génération d'adresse selon le présent exemple de réalisation ;
- la figure 4 représente un organigramme du procédé d'élargissement du masque en cas de recherche infructueuse d'adresse selon l'exemple de réalisation.

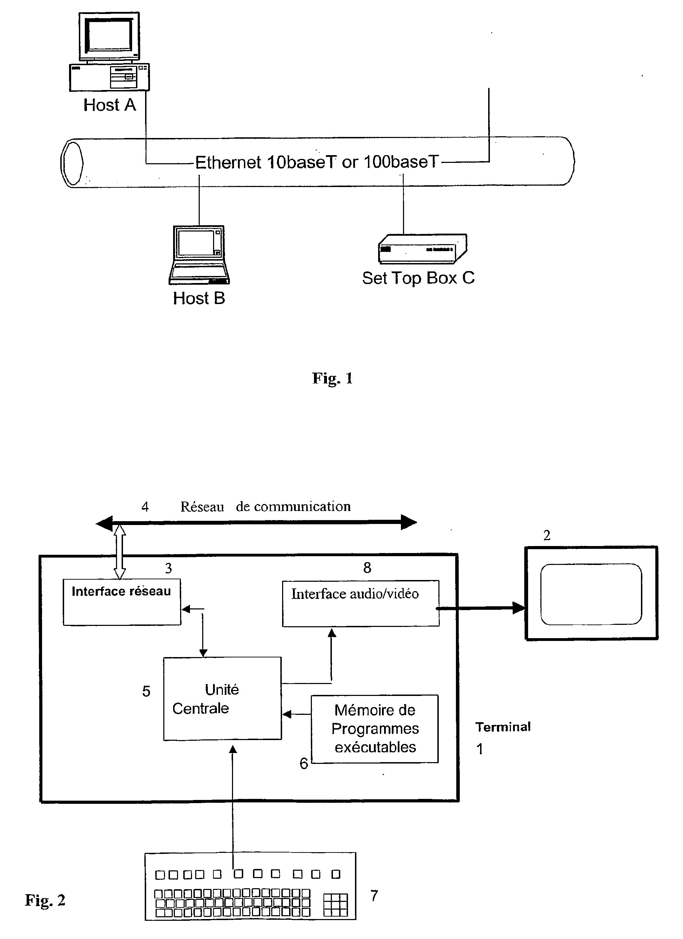

La figure 1 représente schématiquement un réseau de communication permettant à au moins deux terminaux « Host A » et « Host B » de communiquer à l'aide du protocole IP. D'autres appareils peuvent se connecter à ce réseau, par exemple un décodeur de télévision numérique « Set Top Box C ». Le canal de communication est réalisé par un câble ETHERNET 10 ou 100.

Nous allons tout d'abord décrire un exemple d'appareil selon un premier exemple de réalisation de l'invention. La figure 2 présente un terminal multimédia 1 connecté à un dispositif d'affichage 2 tel qu'un écran de visualisation. Le récepteur 1 est par exemple un ordinateur personnel ou un terminal audiovisuel doté de moyens de communication 3 à travers un réseau bidirectionnel 4. Le récepteur 1 comprend une unité centrale 5 reliée entre autre à une mémoire 6 contenant des programmes exécutables, un moyen d'émission de signaux audiovisuels vers un écran. Le terminal est également relié à un clavier 7. Les signaux audiovisuels sont émis vers l'écran 2 via une interface audio/vidéo 8.

Les terminaux disposent d'une adresse IP dont le format dépend du type de réseau auxquels ils sont connectés. L'adresse IP est codée sur 4 octets. Pour les réseaux de très grande taille, de type A l'identifiant du terminal est codé sur 3 octets (ce qui permet de connecter plus de 16 millions de terminaux) et l'identifiant du réseau est codé sur un octet dont le MSB est égal à 0. Pour les réseaux de grande taille, de type B, l'identifiant du terminal est codé sur 2 octets (ce qui permet de connecter plus de 64000 terminaux) et l'identifiant du réseau est codé sur deux octets dont les deux bits les plus significatifs sont « 1 » et « 0 ». Quant aux réseaux de petite taille, de type C, l'identifiant du terminal est codé sur un seul octet (ce qui permet de ne connecter que 254 terminaux, les valeurs 00 et 255 étant réservées pour un autre usage) et l'identifiant du réseau est codé sur trois octets dont les trois bits les plus significatifs MSB sont respectivement « 1 », « 1 » et « 0 ».

Le moyen de génération d'adresse IP est typiquement un programme écrit en mémoire 6, mais il peut aussi être réalisé sous forme de circuits spécialisés (ASIC ou DSP par exemple). Sous la forme d'un programme, le moyen permettant de calculer une adresse est réalisé sous la forme d'un module qui est de façon privilégiée dans la mémoire ROM de l'appareil. Ce module peut aussi être téléchargé à partir d'un support (disquette ou CD ROM), ou encore transmis à l'appareil via un réseau de diffusion.

De façon préférentielle, l'invention est utilisée pour calculer des valeurs d'adresses utilisées dans un protocole IP, ce qui n'exclut pas que l'invention est applicable à d'autres types de protocoles.

Après avoir décrit les différents éléments du terminal selon un exemple de réalisation de l'invention, nous allons maintenant expliquer les différents échanges entre celui-ci et le réseau, pour calculer l'adresse.

Il faut tout d'abord distinguer deux cas :
1° cas : recherche d'une adresse au sein d'un réseau déjà configuré d'au moins deux appareils.
2° cas : recherche d'une adresse au sein d'un réseau conçu pour ne posséder que deux appareils dont un seul est actuellement configuré.

Etudions tout d'abord le premier cas.

Dans un premier temps, l'utilisateur installe son nouvel appareil et le connecte au réseau ETHERNET. Puis, il le met en marche. En règle générale, l'appareil est par défaut en mode « SNOOPER ». S'il ne l'est pas, l'utilisateur le met dans cet état. Dans ce mode de fonctionnement, le nouvel appareil scrute toutes les communications qui transitent sur le réseau.

Dans un second temps, l'utilisateur demande à un second appareil déjà installé et configuré au sein du réseau, d'émettre une requête ARP. « ARP» est l'acronyme en langue anglaise de « Address Resolution Protocol », un protocole de niveau 2 qui permet de faire la traduction entre une adresse IP et une adresse MAC et qui possède l'avantage de diffuser sur le réseau des adresses IP existantes. Une façon simple pour effectuer cela consiste à lancer une requête de connexion vers un autre appareil du réseau à partir de ce second appareil. La requête ARP, qui est en fait la demande de la part de l'émetteur pour avoir l'adresse MAC de l'ordinateur cible, possède les adresses IP de l'émetteur et de la cible. Le nouvel appareil va capter la requête ARP et en extraire l'adresse IP de l'émetteur (« émetteur ») de la requête et l'adresse IP de l'appareil destinataire (« destinataire »). De cette manière, le nouvel appareil récupère des informations du réseau, son identificateur et donc son type A, B ou C, et les valeurs d'adresse de deux terminaux déjà configurés.

Supposons que le réseau est de type C (configuration « 1 » « 1 » « 0 » des MSB), l'identifiant du réseau est codé sur trois octets. Prenons par exemple les valeurs suivantes d'adresses de l'appareil émetteur de la requête et l'appareil destinataire (en décimal et en binaire) :

| Adresse IP de l'émetteur : | | | |
|---|---|---|---|
| 192 | 168 | 000 | 009 |
| 11000000 | 10101000 | 00000000 | 0000 1001 |

| Adresse IP du destinataire : | | | |
|---|---|---|---|
| 192 | 168 | 000 | 025 |
| 11000000 | 10101000 | 00000000 | 00011001 |

Dans le cas d'un réseau domestique (ordinairement de type C), il n'y a pas de sous-réseau, l'adresse IP de l'émetteur ne comprend que deux champs, le générateur d'adresse recherche une adresse disponible dans le réseau où il est connecté.

Pour cela, le nouvel appareil compare les bits de même rang des deux valeurs d'adresse reçues et détermine le bit de rang le plus fort dont la valeur est différente pour l'appareil émetteur et pour l'appareil récepteur. Le champ défini à partir de ce bit et jusqu'au LSB, appartient au champ d'adresse du terminal dans le sous-réseau. Dans l'exemple, le MSB bit dont la valeur est différente est le cinquième, donc les cinq LSB appartiennent au champ adresse. Le programme effectue d'abord un NON OU exclusif entre les deux valeurs d'adresse reçues, le résultat selon le présent exemple est

| | | | |
|---|---|---|---|
| 192 | 168 | 000 | 009 |
| 11000000 | 10101000 | 00000000 | 0000 1001 |
| NOT XOR | | | |
| 192 | 168 | 000 | 025 |
| 11000000 | 10101000 | 00000000 | 00011001 |
| ===== | | | |
| 255 | 255 | 255 | 16 |
| 11111111 | 11111111 | 11111111 | 11101111 |

Puis le générateur d'adresse applique à ce résultat le programme dont le pseudo-code est le suivant :
pour i allant de 30 à 0
si (bi == 1 AND bi+1 == 0) alors
bi=O
fin si
fin pour
où bi représente le ième bit de l'adresse dans l'ordre du LSB au MSB (b31 est le MSB et b0 le LSB).

Ce programme a pour but de rechercher le premier bit à partir des poids fort dont la valeur est différente pour l'adresse 1 et pour l'adresse 2. En l'occurrence, c'est le bit 5. Le programme calcule aussi le masque pour calculer l'adresse en filtrant tous les bits qui forment entre les deux adresses une valeur différente, en l'occurrence, ce sont les cinq premiers bits, la valeur pour la première adresse étant "01001" et celle de la seconde adresse est "11001".

Le masque résultant est le suivant :

| | | | |
|---|---|---|---|
| 255 | 255 | 255 | 224 |
| 11111111 | 11111111 | 11111111 | 11100000 |

Le nouvel appareil va tout d'abord essayer de trouver une adresse disponible en faisant varier de façon décroissante la valeur de ces cinq bits. Pour cela, il va envoyer une requête ARP avec une première valeur d'adresse et attendre un retour. Si un terminal répond à sa requête ARP, cela signifie que cette valeur d'adresse est déjà prise, il passe à une autre adresse. Une variante consiste à faire varier de façon croissante la valeur des cinq bits. Une autre variante consiste à générer de façon aléatoire la valeur de ces cinq bits.

Avantageusement, l'évolution des valeurs d'adresse émises dans les requêtes ARP pour tenter de trouver une valeur disponible s'effectue par valeurs décroissantes, en commençant par la valeur maximale. En effet, traditionnellement les utilisateurs configurent manuellement les valeurs d'adresse en commençant par les petites valeurs et en les augmentant : 01, 02, 03, etc. De telle sorte que si le nouvel appareil commence à tester les valeurs les plus fortes, il a plus de chances de trouver rapidement une valeur disponible, et de minimiser le nombre de requêtes pour la recherche d'une adresse disponible.

Dans l'exemple ci-dessus, la première adresse testée est :
192 - 168 - 000 - 031

Supposons qu'une réponse est envoyée à la requête ARP, cette valeur d'adresse est donc déjà prise, la seconde valeur testée est :
192 - 168 - 000 - 030

Et ainsi de suite, :
192 - 168 - 000 - 029

Si au bout d'un certain temps (ce temps est fixé par la norme au niveau d'une requête appelée RFC signifiant « Request For Comments », définissant le protocole ARP), aucune réponse à une requête ARP n'est émise, le nouvel appareil peut considérer que la valeur d'adresse testée dans la requête ARP est disponible.

Si toutes les adresses IP sont prises, le module de génération d'adresse prévoit d'élargir le masque. Cette partie du module est décrite sous la forme du pseudo code présenté en annexe 2 et représenté sous la forme d'un organigramme à la figure 4. La partie du module de génération d'adresse IP va augmenter d'un bit la taille du champ précédemment déterminé pour contenir l'adresse du terminal. Dans l'exemple ci-dessus, le module va considérer que l'adresse est sur 6 bits, et de nouveau tester les valeurs d'adresses, en mettant ce sixième bit à 1 et en commençant par les valeurs maximales. On aura les valeurs successives testées :
192 - 168 - 000 - 063.
192 - 168 - 000 - 062.
192 - 168 - 000 - 061. ..... jusqu'à : 192 - 168 - 000 - 032

Si aucune valeur d'adresse n'est disponible, le module va élargir le masque au septième bit, et ainsi de suite jusqu'à ce qu'une valeur d'adresse disponible soit trouvée.

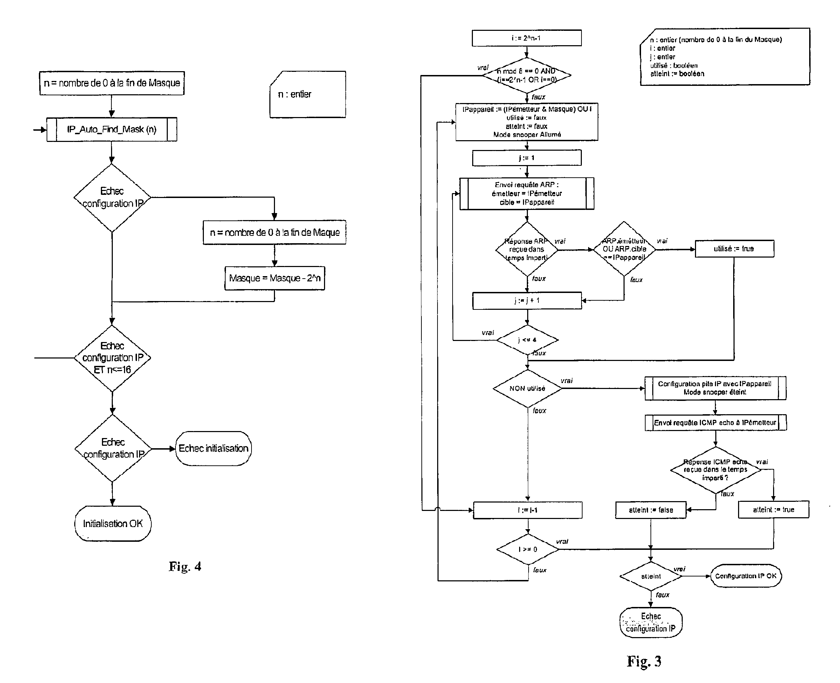

L'annexe 1 contient un programme écrit en pseudo-code pour coder le module de recherche d'adresse. La figure 3 présente un organigramme détaillé correspondant au programme de l'annexe 1.

Une fois qu'une valeur d'adresse a été retenue, il faut pouvoir s'assurer que l'appareil peut communiquer avec cette nouvelle adresse (que les élargissements successifs n'ont pas donné une adresse en dehors du réseau de la première adresse captée). Pour cela, on peut utiliser une commande du protocole ICMP (pour « Internet Control Message Protocole ») appelée « ECHO ». Une commande « ECHO » est envoyée en utilisant le protocole IP avec une certaine quantité de données. Lorsque le destinataire reçoit la commande, il renvoie à l'émetteur le même bloc de données, comme un écho. Cette commande est donc particulièrement bien adaptée pour s'assurer qu'un nouveau terminal peut communiquer en utilisant l'adresse qui vient de lui être affectée.

Si la commande « ECHO » émise par le terminal à configurer ne reçoit pas réponse dans le temps défini dans la RFC 792 (ICMP), alors on peut affirmer que l'adresse calculée ne peut être utilisée sur le réseau (probablement parce que l'élargissement du masque a fait que l'on est plus dans le même réseau ou sous-réseau que l'émetteur de la première requête). La procédure peut donc être abandonnée avec comme résultat qu'aucune adresse valide ne peut être trouvée. Une variante pour détecter la disponibilité d'une adresse consiste à recevoir un message « Destination non-joignable » (l'un des messages d'erreur d'ICMP). Ce message envoyé par un contrôleur de réseau indique qu'il ne connaît pas de terminal possédant cette adresse.

L'annexe 2 contient un programme écrit en pseudo-code pour coder le module d'élargissement du masque permettant de faire varier la valeur de l'adresse du terminal au sein du sous-réseau. La figure 4 présente un organigramme détaillé correspondant au programme de l'annexe 2.

Supposons maintenant que le réseau possède des sous-réseaux. Comme il a été dit dans le préambule de la description, avant chaque communication, le terminal émetteur d'un message doit vérifier si le destinataire appartient au sous-réseau. Pour effectuer ce test, chaque terminal possède le masque de sous-réseau, ce masque est constitué de la concaténation de l'identifiant du réseau, de l'identifiant du sous réseau et du champ d'identifiant des terminaux avec tous les bits à « 0 ». Supposons un réseau de type B avec l'identifiant « 128 », « 168 » associé à un identifiant de sous-réseau codé sur 7 bits. Ce sont alors les bits 10 à 16, les bits 1 à 9 définissant l'adresse du terminal dans le sous-réseau. Le masque de sous-réseau est alors :

| | | | |
|---|---|---|---|
| 255 | 255 | 254 | 025 |
| 11111111 | 11111111 | 11111110 | 00000000 |

Pour un même sous-réseau, un ET logique entre le masque et une adresse IP renvoie l'identifiant complet du réseau et du sous-réseau (appelé dans la suite identifiant réseau). Afin de déterminer si le terminal destinataire appartient au même sous-réseau, le terminal émetteur réalise un ET logique entre l'adresse IP du destinataire et le masque de sous-réseau. Si cette opération renvoie un identifiant de réseau identique à la même opération sur sa propre adresse, alors le destinataire est sur le même sous-réseau que lui et il lui envoie directement le message. Si les deux identifiants de réseau + sous-réseau diffèrent, alors il doit envoyer le message à un serveur intermédiaire.

Le nouvel appareil désirant se configurer doit d'abord calculer un masque minimal permettant de calculer l'identifiant du réseau + sous-réseau. Les premiers bits définissent le type de réseau (A, B ou C) et de ce fait la taille de l'identifiant d u réseau. Dans l'exemple, la configuration « 1 », « 0 » indique que le réseau est de type B - identifiant « 128 », « 168 ». La taille de l'identifiant de sous-réseau est inconnue. Le nouvel appareil sait que les deux appareils qui ont communiqué par une « ARP request » sont du même sous-réseau, et donc leurs adresses IP possèdent la même valeur d'identifiant de sous-réseau. Cette valeur occupe un certain nombre de MSB bits de la valeur d'adresse de terminal. De la même manière que précédemment, le nouvel appareil va tout d'abord élaborer un masque minimal, en calculant la taille minimale du champ contenant la valeur d'adresse du terminal dans le sous-réseau. Pour cela, il détermine la partie variante entre les deux adresses reçues et calcule un masque qui filtre cette partie. Puis, il essaye toutes les valeurs correspondant à ce masque. Si l'une d'entre elles est disponible, le nouvel appareil la prend et se configure avec elle. Si aucune adresse n'est disponible, le nouvel appareil élargit le masque en commençant par le bit à «1» le moins significatif du masque, ce bit passe à « 0 ». L'élargissement du masque et la recherche d'une adresse se déroule de la même façon que décrite précédemment pour un réseau sans sous-réseau. L'avantage de cette méthode consiste en ce qu'elle permet à coup sûr de tester en priorité toutes les adresses du sous-réseau. Si à la suite d'un nouvel élargissement d'un bit, le masque dépasse le sous-réseau, cela est consécutif au fait que toutes les adresses du sous-réseau ont été testées et aucune n'est disponible. Alors, au premier essai d'une adresse avec la nouvelle valeur du masque élargi, le terminal ne recevant aucune réponse récupèrera cette adresse, mais lorsqu'il voudra vérifier que cette adresse est bien disponible en effectuant une requête « ECHO » ICMP, il se rendra compte que cette adresse ne lui permet pas de communiquer. Il émet alors à l'affichage un message indiquant que le générateur d'adresse n'a pas pu trouver une adresse.

Etudions maintenant la solution selon un autre exemple de réalisation concernant le second cas.

Le réseau est alors limité à deux appareils. Ces appareils utilisant le protocole IP standard doivent de la même façon que pour un réseau de type A, B ou C, avoir une adresse spécifique qui leur permet de dialoguer. La solution selon cet autre exemple de réalisation consiste en ce que le terminal en mode « Snooper » s'aperçoive qu'aucun terminal ne répond à la requête ARP, il en déduit qu'il n'y a pas de terminal ayant cette valeur d'adresse et que donc, il peut se l'approprier pour se configurer, ce qui lui évite de devoir calculer une troisième valeur.

Dans un premier temps, un appareil (dit « premier ») possède déjà une adresse configurée, le second est mis en mode « snooper » selon le présent exemple de réalisation. La différence par rapport à la précédente situation est le fait que le premier appareil ne peut envoyer de requête de connexion vers un autre appareil car il est le seul a être configuré. L'astuce consiste à demander à l'utilisateur d'émettre sur le premier appareil une requête de connexion vers un appareil qui n'existe pas. L'appareil à configurer reçoit cette adresse, s'aperçoit qu'elle est disponible car aucun appareil ne répond à cette requête, et décide de se l'affecter. C'est donc bien le même processus que précédemment, en le simplifiant au maximum, le terminal n'a plus besoin de calculer une valeur d'adresse, il récupère la même valeur qu'une adresse d'un terminal qui en fait n'existe pas. Pour calculer facilement une adresse compatible avec le réseau, le terminal configuré émet une seconde qui ne diffère que de la valeur d'un seul bit. Selon un perfectionnement particulièrement avantageux, le bit à changer appartient à l'octet de poids faible de l'adresse et plus particulièrement celui de poids le plus faible (LSB). De cette façon, si l'adresse du premier appareil est paire (valeur du LSB égale à « 0 ») alors, il lance une requête de connexion à un appareil dont la valeur d'adresse est la même que la sienne sauf pour le bit le moins significatif qui est forcé à « 1 » (l'adresse immédiatement supérieure). De même si l'adresse est impaire (valeur du LSB égale à « 1 ») alors, il lance une requête de connexion à un appareil dont la valeur d'adresse est la même que la sienne sauf pour le bit le moins significatif qui est forcé à « 0 » (l'adresse immédiatement inférieure).

Le reste de la procédure se déroule de la même façon. Le masque calculé ne peut donner que 2 adresses et l'une des 2 est forcément valide.

Les présents modes de réalisation doivent être considérés à titre d'illustration mais peuvent être modifiés dans le domaine défini par la portée des revendications jointes. En particulier, l'invention ne se limite pas aux décodeurs de télévision mais peut s'appliquer à tout dispositif de réception d'émissions audiovisuelles numériques : ordinateur, appareil connecté à un réseau IP, ....

### ANNEXE 1

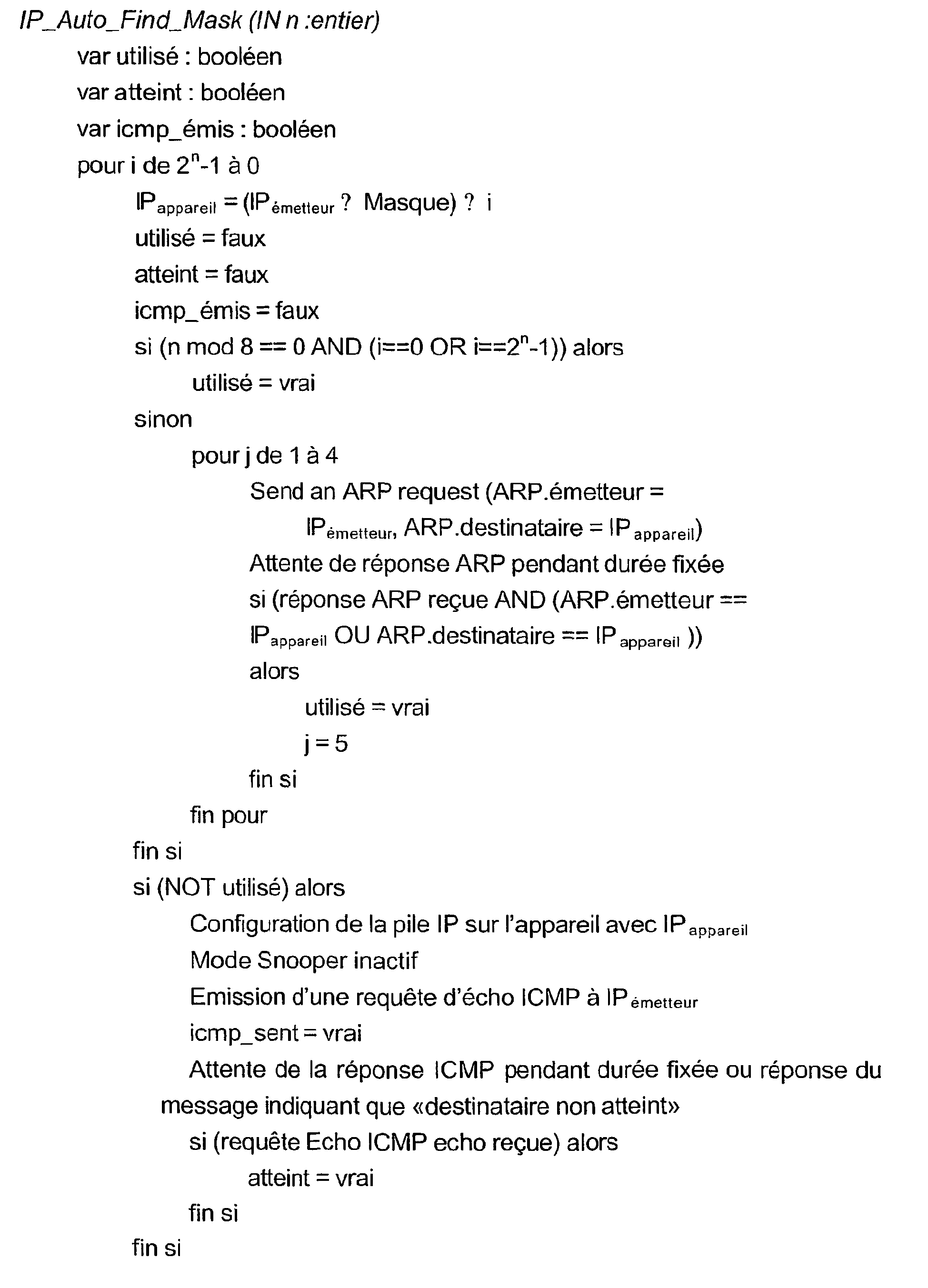

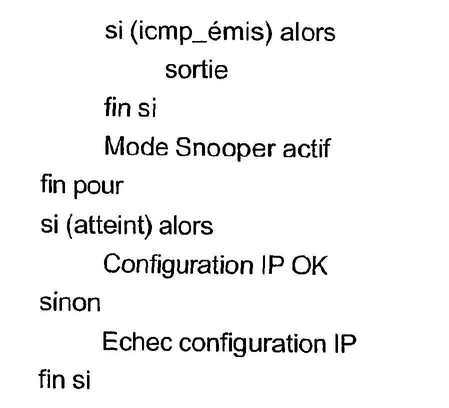

### ANNEXE 2

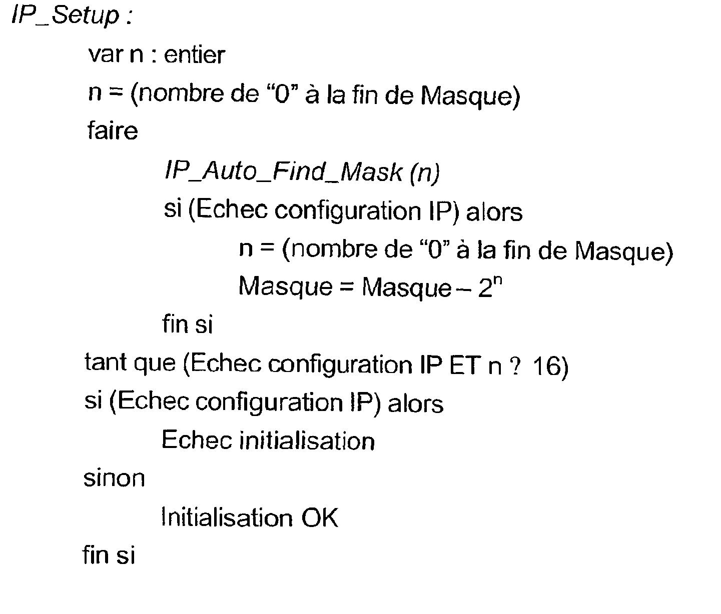

## Revendications

1. Procédé de génération d'une valeur d'adresse pour un terminal de communication relié à un réseau, le procédé étant **caractérisé en ce qu'**il comporte les étapes suivantes, au niveau du terminal :
a) scrutation des messages émis sur le réseau et réception d'un message échangé entre deux terminaux déjà configurés comportant un couple de première et seconde valeurs d'adresse,
b) détermination d'une valeur caractéristique du réseau, ladite valeur étant contenue dans la première et la seconde valeur d'adresse
c) calcul d'une troisième valeur d'adresse contenant la valeur caractéristique du réseau,
d) affectation de la troisième valeur d'adresse au terminal si cette valeur n'est pas déjà affectée à un autre terminal.

2. Procédé de génération d'une valeur d'adresse selon la revendication 1. **caractérisé en ce que** si le terminal déduit de la communication captée sur le réseau de communication que la seconde adresse est disponible, alors l'étape de calcul consiste à donner à la troisième valeur la valeur de la seconde valeur.

3. Procédé de génération d'une valeur d'adresse selon la revendication 1, **caractérisé en ce que** la troisième valeur est calculée en concaténant la valeur caractéristique du réseau avec une valeur propre, cette valeur propre étant maximale lors du premier calcul, cette valeur propre étant retranchée d'une unité chaque fois que la précédente troisième valeur calculée se trouve affectée à un autre terminal.

4. Procédé de génération d'une valeur d'adresse selon la revendication 3, **caractérisé en ce qu'**il comporte une étape consistant à changer la valeur du bit de poids le plus faible de la valeur caractéristique du réseau, la nouvelle valeur caractéristique étant diminuée de ce bit, ladite étape étant déclenchée lorsque toutes les troisièmes valeurs calculées à partir de la précédente valeur caractéristique du réseau sont déjà affectées à un terminal.

5. Procédé de génération d'une valeur d'adresse selon l'une quelconque des revendications précédentes; **caractérisé en ce que** l'étape d'affectation comprend une étape d'émission d'une requête de communication vers un terminal possédant la troisième valeur d'adresse, et une étape d'attente de réception d'une réponse, l'existence d'une réception signifiant que la troisième valeur d'adresse n'est pas disponible.

6. Procédé de génération d'une valeur d'adresse selon l'une quelconque des revendications 1 à 4, **caractérisé en ce que** l'étape d'affectation comprend une étape d'émission d'une requête de communication vers un terminal possédant la troisième valeur d'adresse, et une étape de réception d'un message émis par le réseau suite à ladite requête indiquant que la troisième valeur d'adresse n'est pas affectée à un terminal du réseau, l'étape de réception d'un tel message déclenchant l'affectation de la troisième valeur d'adresse au terminal.

7. Appareil électronique destiné à être connecté à un réseau de communication (4) comprenant un moyen de communication bi-directionnel (3) avec ledit réseau, **caractérisé en ce qu'**il comporte un moyen de réception (3, 5, 6) de tous les messages émis sur le réseau afin de sélectionner un message échangé entre deux terminaux déjà configurés, le dit message comportant une première et une seconde valeur d'adresse, un moyen (5,6) pour déterminer une valeur caractéristique du réseau qui constitue une partie de la première et de la seconde valeur d'adresse, et pour calculer une troisième valeur d'adresse contenant la valeur caractéristique du réseau, et pour affecter cette troisième valeur d'adresse à l'appareil si, la réaction à la suite d'une requête de communication émise par le moyen de communication (3) à destination d'un appareil possédant la troisième adresse indique que cette troisième valeur d'adresse n'est affectée à aucun terminal du réseau.

8. Appareil électronique selon la revendication 7, **caractérisé en ce qu'**il comporte un moyen d'émission (3,5,6) d'une requête de communication vers un appareil possédant la troisième valeur d'adresse, et un moyen de détection (3,5,6) d'une réponse à ladite requête, la détection d'une réponse signifiant que la troisième valeur d'adresse n'est pas affectée à un appareil du réseau.

9. Appareil électronique selon la revendication 7 ou 8, **caractérisé en ce que** le moyen (5,6) de calcul concatène la valeur caractéristique du réseau précédemment déterminée avec une valeur propre, cette valeur propre étant maximale lors d'un premier calcul, le moyen de calcul retranchant une unité à cette valeur propre pour calculer une nouvelle troisième valeur d'adresse lorsqu'il s'avère que la précédente valeur d'adresse calculée est déjà affectée à un terminal.

10. Appareil électronique selon l'une quelconque des revendications 7 à 9, **caractérisé en ce qu'**il comporte un moyen (5,6) pour changer la valeur du bit de poids le plus faible de la valeur caractéristique du réseau, la nouvelle valeur caractéristique étant diminuée de ce bit, ledit moyen étant déclenché lorsqu'il s'avère que toutes les troisièmes valeurs calculées à partir de la précédente valeur caractéristique du réseau sont déjà affectées à un terminal.

## Claims

1. A procedure for generating an address value for a communication terminal linked to a network, the procedure being **characterized in that** it comprises the following steps, at terminal level:
a) scanning of messages sent over the network and reception of a message interchanged between two terminals already configured comprising a pair of first and second address values,
b) determination of a characteristic value of the network, said value being contained in the first and the second address values,
c) calculation of a third address value containing the characteristic value of the network,
d) assignment of the third address value to the terminal if this value is not already assigned to another terminal.

2. Procedure for generating an address value as claimed in claim 1, **characterized in that** if the terminal deduces from the call captured on the communication network that the second address is available, then the calculation step consists in giving to the third value the value of the second value.

3. The procedure for generating an address value as claimed in claim 1, **characterized in that** the third value is calculated by concatenating the characteristic value of the network with a specific value, this specific value being maximum on the first calculation, this specific value being reduced by one unit each time that the preceding third value calculated is found to be assigned to another terminal.

4. The procedure for generating an address value as claimed in claim 3, **characterized in that** it comprises a step consisting in changing the value of the least significant bit of the characteristic value of the network, the new characteristic value being reduced by this bit, said step being triggered when all the third values calculated from the preceding characteristic value of the network are already assigned to a terminal.

5. The procedure for generating an address value as claimed in any one of the preceding claims, **characterized in that** the assignment step comprises a step for sending a communication request to a terminal having the third address value, and a step for awaiting reception of a response, the reception of a response signifying that the third address value is not available.

6. The procedure for generating an address value as claimed in any one of claims 1 to 4, **characterized in that** the assignment step comprises a step for sending a communication request to a terminal having the third address value, and a step for receiving a message sent by the network following said request indicating that the third address value is not assigned to a terminal of the network, the step for receiving such a message triggering the assignment of the third address value to the terminal.

7. An electronic device designed to be connected to a communication network (4), comprising a means of bidirectional communication (3) with said network, **characterized in that** it comprises a means of receiving (3, 5, 6) all the messages sent over the network in order to select a message interchanged between two terminals already configured, said message comprising a first and a second address value, a means (5,6) for determining a characteristic value of the network which constitutes a part of the first and the second address values, and for calculating a third address value containing the characteristic value of the network, and for assigning this third address value to the device if the reaction following a communication request sent by the communication means (3) to a device having the third address indicates that this third address value is not assigned to any terminal of the network.

8. The electronic device as claimed in claim 7, **characterized in that** it comprises a means of sending (3,5,6) a communication request to a device having the third address value, and a means of detecting (3,5,6) a response to said request, the detection of a response signifying that the third address value is not assigned to a device of the network.

9. The electronic device as claimed in claim 7 or 8, **characterized in that** the calculation means (5,6) concatenates the characteristic value of the network previously determined with a specific value, this specific value being at its maximum on a first calculation, the calculation means subtracting one unit from this specific value to calculate a new third address value when it turns out that the preceding calculated address value is already assigned to a terminal.

10. The electronic device as claimed in any one of claims 7 to 9, **characterized in that** it comprises a means (5,6) for changing the value of the least significant bit of the characteristic value of the network, the new characteristic value being reduced by this bit, said means being triggered when it turns out that all third values calculated from the preceding characteristic value of the network are already assigned to a terminal.

## Patentansprüche

1. Verfahren zur Erzeugung eines Adresswerts für ein mit einem Netzwerk verbundenes Kommunikationsendgerät, wobei das Verfahren **dadurch gekennzeichnet ist, dass** es am Endgerät die folgenden Schritte aufweist:
e) Abruf der über das Netzwerk ausgesendeten Nachrichten und Empfang einer zwischen zwei bereits konfigurierten Endgeräten ausgetauschten Nachricht, die ein Paar aus einem ersten und einem zweiten Adresswert umfasst,
f) Bestimmung eines charakteristischen Werts des Netzwerks, wobei der Wert in dem ersten und in dem zweiten Adresswert enthalten ist;
g) Berechnung eines dritten Adresswerts, der den charakteristischen Wert des Netzwerks enthält;
h) Zuordnung des dritten Adresswerts zu dem Endgerät, wenn dieser Wert nicht bereits einem anderen Endgerät zugeordnet ist.

2. Verfahren zur Erzeugung eines Adresswerts nach Anspruch 1, **dadurch gekennzeichnet, dass** der Schritt der Berechnung darin besteht, dem dritten Wert den Wert des zweiten Werts zu geben, wenn das Endgerät aus der in dem Kommunikationsnetzwerk erfassten Kommunikation schließt, dass die zweite Adresse verfügbar ist.

3. Verfahren zur Erzeugung eines Adresswerts nach Anspruch 1, **dadurch gekennzeichnet, dass** der dritte Wert berechnet wird, indem der charakteristische Wert des Netzwerks mit einem eigenen Wert verkettet wird, wobei dieser eigene Wert bei der ersten Berechnung maximal ist, wobei dieser eigene Wert jedes Mal um eine Einheit verringert wird, wenn der vorige berechnete dritte Wert zu einem anderen Endgerät zugeordnet ist.

4. Verfahren zur Erzeugung eines Adresswerts nach Anspruch 3, **dadurch gekennzeichnet, dass** es einen Schritt aufweist, der darin besteht, den Wert des Bits mit der geringsten Wertigkeit (Least Significant Bit) des charakteristischen Werts des Netzwerks zu ändern, wobei der neue charakteristische Wert um dieses Bit verringert wird, wobei der Schritt ausgelöst wird, wenn alle dritten, aufgrund des vorigen charakteristischen Werts des Netzwerks berechneten Werte bereits einem Endgerät zugeordnet sind.

5. Verfahren zur Erzeugung eines Adresswerts nach einem der vorhergehenden Ansprüche, **dadurch gekennzeichnet, dass** der Schritt der Zuordnung einen Schritt der Aussendung einer Kommunikationsanforderung an ein Endgerät, das den dritten Adresswert besitzt, und einen Schritt des Wartens auf den Empfang einer Antwort umfasst, wobei das Vorhandensein eines Empfangs bedeutet, dass der dritte Adresswert nicht verfügbar ist.

6. Verfahren zur Erzeugung eines Adresswerts nach einem der Ansprüche 1 bis 4, **dadurch gekennzeichnet, dass** der Schritt der Zuordnung einen Schritt der Aussendung einer Kommunikationsanforderung an ein Endgerät umfasst, das den dritten Adresswert besitzt, und einen Schritt des Empfangs einer von dem Netzwerk auf die Anforderung hin ausgesendeten Nachricht, wonach der dritte Adresswert nicht zu einem Endgerät des Netzwerks zugeordnet ist, wobei der Schritt des Empfangs einer solchen Nachricht die Zuordnung des dritten Adresswerts zu dem Endgerät auslöst.

7. Elektronisches Gerät, das dazu bestimmt ist, mit einem Kommunikationsnetzwerk (4) verbunden zu werden, mit einem Mittel (3) für eine bidirektionale Kommunikation mit dem Netzwerk, **dadurch gekennzeichnet, dass** es ein Mittel (3, 5, 6) für den Empfang aller über das Netzwerk ausgesendeten Nachrichten aufweist, um eine zwischen zwei bereits konfigurierten Endgeräten ausgetauschte Nachricht auszuwählen, wobei die Nachricht einen ersten und einen zweiten Adresswert aufweist, ein Mittel (5, 6) zur Bestimmung eines charakteristischen Werts des Netzwerks, der einen Teil des ersten und des zweiten Adresswerts bildet, und zur Berechnung eines dritten Adresswerts, der den charakteristischen Wert des Netzwerks enthält, und zur Zuordnung dieses dritten Adresswerts zu dem Gerät, wenn die Reaktion auf eine Kommunikationsanforderung hin, die von dem Kommunikationsmittel (3) zu einem die dritte Adresse besitzenden Gerät ausgesendet wird, angibt, dass dieser dritte Adresswert keinem Endgerät des Netzwerks zugeordnet ist.

8. Elektronisches Gerät nach Anspruch 7, **dadurch gekennzeichnet, dass** es ein Mittel (3, 5, 6) zur Aussendung einer Kommunikationsanforderung an ein den dritten Adresswert besitzendes Gerät und ein Mittel (3, 5, 6) zum Ermitteln einer Antwort auf die Anforderung aufweist, wobei das Ermitteln einer Antwort bedeutet, dass der dritte Adresswert keinem Gerät des Netzwerks zugeordnet ist.

9. Elektronisches Gerät nach Anspruch 7 oder 8, **dadurch gekennzeichnet, dass** das Berechnungsmittel (5, 6) den zuvor bestimmten charakteristischen Wert des Netzwerks mit einem eigenen Wert verkettet, wobei dieser eigene Wert maximal bei einer ersten Berechnung ist, wobei das Berechnungsmittel von diesem eigenen Wert eine Einheit abzieht, um einen neuen dritten Adresswert zu berechnen, wenn sich erweist, dass der vorige berechnete Adresswert bereits einem Endgerät zugeordnet ist.

10. Elektronisches Gerät nach einem der Ansprüche 7 bis 9, **dadurch gekennzeichnet, dass** es ein Mittel (5, 6) zum Ändern des Werts des Bits mit der geringsten Wertigkeit (Least Significant Bit) des charakteristischen Werts des Netzwerks aufweist, wobei der neue charakteristische Wert um dieses Bit verringert wird, wobei das Mittel ausgelöst wird, wenn sich erweist, dass alle dritten, aufgrund des vorigen charakteristischen Werts des Netzwerks berechneten Werte bereits einem Endgerät zugeordnet sind.
